# EUROPÄISCHE PATENTSCHRIFT

(11) **EP 2 112 473 B1**
(45) Veröffentlichungstag und Bekanntmachung des Hinweises auf die Patenterteilung: **09.11.2016**
(21) Anmeldenummer: 08007986.6
(22) Anmeldetag: 25.04.2008
(51) Int. Cl.: G01D 4/00

(54) **Kommunikationsvorrichtung zur bidirektionalen Kommunikation**
Communication device for bidirectional communication
Dispositif de communication bidirectionnelle

(43) Veröffentlichungstag der Anmeldung: 28.10.2009
(73) Patentinhaber: APATOR S.A., 87-100 Torun (PL)
(72) Erfinder: Buszka, Remigiusz, 87100 Torún (PL); Sztachelski, Michal, 87100 Torún (PL); Mikowski, Cezary, 87100 Torún (PL)
(74) Vertreter: Bischof, Oliver

(56) Entgegenhaltungen:
- WO-A-03/079717
- DE-A1- 10 136 409
- US-A- 4 119 948
- US-A- 6 014 089

## Beschreibung

Die Erfindung betrifft eine Kommunikationsvorrichtung zur bidirektionalen Kommunikation für ein Datenaustausch-System, wobei die Kommunikationsvorrichtung ein tragbares miniaturisiertes Gehäuse aufweist, welches einen Lichtsignalempfänger und/oder -sender sowie wenigstens eine optische Sammellinse beinhaltet.

In DE 101 36 409 A 1 ist ein in eine Brusttasche eines Hemdes einhängbares, miniaturisiertes Elektronikgehäuse beschrieben, welches wiederum Teil eines Kopfhörers oder eines Kinnbügel-Kopfhörers ist. Innerhalb des Elektronikgehäuses befindet sich ein Sender oder eine Diode zum Empfang von Signalen in Form modulierter Lichtwellen, insbesondere Infrarotwellen. Das Elektronikgehäuse ist mit einem für die Wellen durchlässigen Fenster versehen, dessen mehrere Bereiche jeweils als optische Linse ausgebildet sind. Dies soll einen Empfangsrichtungskegel der Diode als Signalübertragungsbauteil im Gehäuse vergrößern. Durch entsprechende Anordnung an einem Fenster mit mehreren Linsen oder von mehreren Fenstern mit jeweils einer oder mehreren Linsen kann eine nach außen gewölbte äußere Oberfläche des Gehäuses so ausgestaltet sein, dass einen breiten Richtungs-Kegelwinkel von 180° mit zerstreuten Lichtsignalen ergibt. Auf dieser Weise ist der Signalempfang weniger richtungsempfindlich. Darüber hinaus wird das Elektronikgehäuse in der Unterhaltselektronik, beispielsweise bei der Signalübertragung von einer Stereoanlage zum Kopfhörer oder als Fernbedienung bei Garagentoren und Autotürschlössern eingesetzt.

Aus US 6 351 223 und WO 01/15114 sind Datenaustauschverfahren über Netzverbindungen verschiedener Art bekannt.
Sie bedürfen jedoch zusätzlicher und kostspieliger Infrastruktur, z. B. Interfaces, Modems und Verkabelung bzw. eines Zugangs zu kabellosen Netzen.

Aus US 4 731 575 und GB 2 265 016 sind Kommunikationsverfahren bekannt, bei denen Magnetkarten genutzt werden. Weiterhin sind aus US 6 529 883 Kontaktschaltungen bekannt, unter welchen die aus EP 0655716 und US 4 871 886 bekannten Schlüssel einen besonderen Fall darstellen.

Bekannt sind auch kontaktlose Schaltungen. Darüber hinaus sind in US 6411219 und US 5528233 Kommunikationsverfahren über Radio-Interface beschrieben. Aus DE 3804592 und DE 4432324 sind induktive bzw. kapazitive Kopplungen bekannt.

Diese Lösungen ermöglichen jedoch eine Übertragung von relativ geringer Informationsmenge und erfordern die Verwendung von zusätzlichen Kartenlesegeräten oder anderen zusätzlichen Zwischengliedern (Interfaces) in den zu bedienenden Vorrichtungen. Durch das Vorhandensein von bei diesen Lösungen notwendigen Öffnungen bzw. Spalten und Kontaktstellen in den Gehäusen entsteht die Möglichkeit eines unerwünschten Eingriffs sowie einer Verschlechterung von Isolations- und Schutzeigenschaften.

Bekannt ist auch ein Kommunikationsverfahren, das durch ein optisches Interface und danach durch einen an ein Peripheriegerät angeschlossenen Kommunikationskopf verwirklicht wird. So zeigt beispielsweise US 5 406 075 ein Ablesesystem mit einem Lichtwellenleiter, der mit dem optischen Kommunikationskopf endet. Von Nachteil ist die durch die Leitung erschwerte Handhabung mit dem Kommunikationskopf und Notwendigkeit eines Anschlusses an ein Peripheriegerät.

Gemäß US-A 4 119 948wird eine Monitoreinheit per Laserstrahl oder Infrarotimpulsen von einer Mobilstation aus abgetastet. Die Mobilstation kann ein Flugzeug, ein Auto oder aber eine Person sein, die die Mobilstation trägt Die an die Stromversorgung eines Hauses angeschlossene Monitoreinheit tastet wiederum elektrooptisch den Verbrauchszähler ab. In der Beschreibung zu US-A 4 119 948 sind Leucht- und Photodioden der Monitoreinheit erwähnt worden, die neben der Zählerscheibe "beiderseitig sitzen", jedoch offensichtlich nicht an den Verbrauchszähler angeschlossen sind im Sinne einer mechanischen Verbindung. Es kann zu keinem flächigen Kontakt kommen, da das optische System des Monitors so ausgelegt ist, dass es nur über einen vorgegebenen Abstand mit einer Abfragestation zusammenarbeiten kann. Dabei bedeutet der Begriff "Abfragestation" eine Sender-Empfängeranordnung, welche einen elektro-optischen Transponder anregt und seine Antwort empfängt.

US-A 6 014 089 befasst sich mit einer Fernmeldeschnittstelle im Bereichder Telekommunikation, die es erlaubt, die Daten kabellos zu einer entfernten Vorrichtung zu übertragen. Hierbei werden vorzugsweise digital gesteuerte Standard-Rundfunk-Übertragungssysteme mit unterschiedlichen Funkfrequenzen genutzt. Die Daten können über eine an das Telekommunikationssystem angeschlossene Vorrichtung automatisch gesammelt werden, z. B. an ein vorhandenes fest verdrahtetes oder drahtloses Telefonsystem. Die Vorrichtung kann einen optischen oder infraroten Sender und Empfänger aufweisen. Die Übertragung der Daten vom Sender zu einer Datenerfassungs-Einheit kann durch einen induktiven und kapazitiven regenerativen Superstromkreis erfolgen. Die drahtlose Datenerfassungs-Einheit kann über einen solarbetriebenen Akkumulator fernbetrieben werden und umfasst eine zentrale Verarbeitungseinheit (CPU) mit einem elektronischen Speicher.

WO 03/079717 A beschreibt ein Verfahren und eine Vorrichtung zur drahtlosen Telemetrie mit Hilfe von sogenannten Ad-Hoc-Netzwerken. Das System umfasst eine Computer-Zentraleinheit, die wahlweise mit mehreren in einem Ballungsraum vorhandenen Kommunikations-Einheiten in der Art eines Maschen-Netzes in Verbindung gesetzt werden kann. Es kann eine zusätzliche, mobile, in einem Auto installierte Computereinheit eingesetzt werden. Die Fernsteuerung ermöglicht eine flexible Ablesung des Energieverbrauchs sowie das Erfassen von Störungsfällen.

Die Aufgabe der Erfindung besteht darin, eine Kommunikationsvorrichtung anzugeben, die die in den Vorrichtungen vorhandenen Interfaces nutzen, sichere Kommunikation ermöglichen und bei der die für die bekannten Lösungen charakteristischen Nachteile nicht auftreten. Insbesondere wird eine einfache, bedienungsfreundliche, kabellose Kommunikationsvorrichtung mit einer möglichst exakten Positionierung angestrebt.

Diese Aufgabe wird durch eine Kommunikationsvorrichtung gemäss Anspruch 1 gelöst, bei der - innerhalb des Gehäuses wenigstens ein nichtflüchtiger Datenspeicher, wenigstens ein die Kommunikationsprotokolle erstellender Prozessor und wenigstens ein bidirektionaler optischer Lesekopf untergebracht sind, - ins Gehäuse wenigstens ein Magnetelement eingebaut ist, mit welchem die Kommunikationsvorrichtung zu einem flächigen Kontakt mit einem Verbrauchszähler und/oder mit einer Basisstation des Datenaustausch-Systems bringbar und dort lösbar gehaltert ist.

Dabei wird die Kommunikationsvorrichtung kabellos zum flächigen Kontakt mit einer zur Basisstation gehörenden Andockstation gebracht.

Die Kommunikationsvorrichtung kann auf magnetischem oder mechanischem Wege zum flächigen Kontakt mit dem Verbrauchszähler und/oder mit der Andockstation gebracht werden. Eine mechanische Andockung der Kommunikationsvorrichtung kann beispielsweise über einen einfachen, schnellen Bajonett-Verschluss oder über eine leicht lösbare Rastverbindung erfolgen. Für die mobile Auslesung der Zählerdaten steht eine spezielle, an die optische Datenschnittstelle des Verbrauchszählers angepasste Software zur Verfügung.
Mit der Kommunikationsvorrichtung gemäß Erfindung kann ein Kommunikationsverfahren *verwirklicht werden, welches* keine zusätzliche und kostspielige Infrastruktur erfordert, z. B. Interfaces, Modems und Verkabelung oder den Zugang zu kabellosen Netzen und lässt sich damit billiger realisieren als die bekannten Kommunikationsverfahren. Es werden keine zusätzlichen Lesegeräte in dem Peripheriegerät benötigt, weil die Kommunikation durch den optischen Port erfolgt. Die Menge der zu übertragenden Informationen ist lediglich durch die Größe des Datenspeichers beschränkt.
Ein Datenaustausch-System setzt sich aus wenigstens einem mit einem optischen Port ausgestatteten Verbrauchszähler, einer Basisstation und wenigstens einer zur bidirektionalen Kommunikation vorgesehenen Kommunikationsvorrichtung zusammen, wobei die letztere ein miniaturisiertes Gehäuse aufweist, in dem wenigstens ein nichtflüchtiger Datenspeicher, wenigstens ein die Kommunikationsprotokolle erstellender Prozessor und wenigstens ein optischer Lesekopf untergebracht sind.
Das miniaturisierte Gehäuse weist vorzugsweise die Form einer flachen, runden Dose auf, die beispielsweise einer Bonbon- oder Cremedose ähnelt und ähnlich wie eine solche Dose aus einem Unterteil und einem Deckel besteht. Der Deckel kann mit dem Unterteil abdichtend verschraubt (Schraubdeckel) sein oder in das Unterteil unter Federkraft ebenfalls abdichtend einrasten. Ein Bajonett-Verschluss oder ein Klappdeckel kommen hier auch in Frage. Auch andere Abdichtungen sind möglich, beispielsweise ein umlaufender Wulst, welcher mit einer entsprechenden Auskehlung am Gegenstück mitwirkt, oder zusätzliche elastomere Dichtungen.

Das miniaturisierte Gehäuse kann in Draufsicht auf seinen Deckel auch polygonal sein.

Die aus dem Gehäuse und dessen Innenleben gebildete Kommunikationsvorrichtung kann als bidirektionale Schnittstelle für den Datenaustausch zwischen dem Verbrauchszähler und der Basisstation bezeichnet werden. Der Datenaustausch kann über optische Infrarotwellen erfolgen. Dabei weist das Gehäuse und damit die Kommunikationsvorrichtung keinerlei mechanische Verbindungsglieder, wie Kabel, mit dem Verbrauchszähler und der Basisstation auf.

Die Messwerkkonstruktion basiert auf dem zentral programmierbaren Prozessor, der mit dem nicht-flüchtigen Datenspeicher und einer internen, batteriegespeisten Echtzeituhr zusammenarbeitet. Als Messelement kann ein Stromwandler eingesetzt sein.
Als nichtflüchtigen Speicher bezeichnet man einen Speicher, dessen gespeicherte Daten auch nach dem Ausschalten des Rechners oder nach Stromunterbrechung erhalten bleiben. Ein nichtflüchtiger Speicher ist beispielsweise ein in der erfindungsgemäßen Vorrichtung eingesetzter EEPROM-Baustein von Microchip.

Vorteilhaft ist, das miniaturisierte Gehäuse mit wenigstens einer, den Lichtstrahl verstärkenden Sammellinse zu versehen, die vorzugsweise durch eine im Material des Deckels geformte Mulde entstanden ist. Um die Lichtdispersion zu reduzieren, kann die Sammellinse seitlich abgeschirmt sein.

Vorzugsweise ist das Material des Gehäuses transparent oder transluzent bzw. gefärbt, wobei die Farbe vorzugsweise an die Farbe anknüpft, die bei anderen Erzeugnissen desselben Herstellers, insbesondere bei den Elektrizitätszählern, Verwendung findet. Der Lichtstrahl kann durch die transparenten Wandungen des Gehäuses hindurchtreten.

Das Datenaustausch-System mit Kommunikationsvorrichtung gemäß Erfindung ist anhand der Zeichnung näher erläutert. Die Figuren zeigen:
Fig. 1 Hauptelemente des erfindungsgemäßen Datenaustausch-Satzes sowie den Verlauf von Informationen;
Fig. 2 ein Blockschema der Kommunikationsvorrichtung sowie den Verlauf von Signalen in der Kommunikationsvorrichtung;
Fig. 3 ein miniaturisiertes Gehäuse der Kommunikationsvorrichtung gemäß Erfindung in einer Seitenansicht;
Fig. 4 einen Schnitt A-A gemäß Fig. 3;
Fig. 5 die Kommunikationsvorrichtung in einer perspektivischen Ansicht;
Fig. 6 das miniaturisierte Gehäuse mit einmontierter Elektronikplatte in einer perspektivischen, explodierenden Darstellung;
Fig. 7 einen Deckel des miniaturisierten Gehäuses in einer perspektivischen Ansicht.

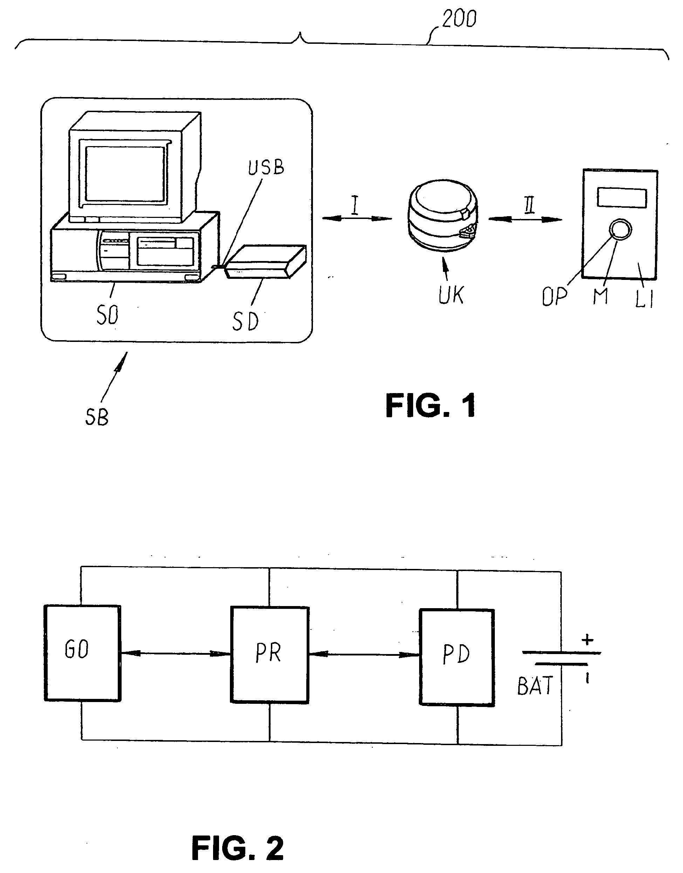

*Die* bidirektionale Kommunikation zwischen einer Basisstation SB mit einem Elektrizitätszähler LI, *die* der Fig. 1 zu entnehmen ist, nutzt eine insbesondere in den Elektrizitätszählern LI standardmäßig vorhandene optische Schnittstelle OP (optischer Port) und eine erfindungsgemäße Kommunikationsvorrichtung UK. Das Verfahren nutzt auch eine in der Basisstation SB vorhandene Andockstation SD, die mit einer Servicestation SO über einen USB-Anschluss (USB) verbunden ist. Die Basisstation SB, Kommunikationsvorrichtung UK und der Elektrizitätszähler LI bilden einen Datenaustausch-System 200.

Das Kommunikationsverfahren verläuft in zwei Schritten und besteht darin, dass im ersten Schritt (I) vermittels der Basisstation SB Informationen aus der Kommunikationsvorrichtung UK abgelesen werden. Zu diesem Zweck wird die Kommunikationsvorrichtung UK zum flächigem Kontakt mit der Andockstation SD gebracht. Diese vorher durch den Elektrizitätszähler LI aufgezeichneten Informationen werden dann in der Kommunikationsvorrichtung UK aufgezeichnet, worauf diese Daten an den von der Kommunikationsvorrichtung zu bedienenden Elektrizitätszähler LI weitergeleitet werden.

Im zweiten Schritt (II) wird die Kommunikationsvorrichtung UK in eine an der Stirnwand des Elektrizitätszählers LI vorhandene Mulde M ebenfalls befestigungsfrei eingelegt. Dabei erfolgt zwischen ihnen ein Datenaustausch über den optischen Port OP des Elektrizitätszählers LI, das heißt die Daten aus der Kommunikationsvorrichtung UK werden im Elektrizitätszähler LI aufgezeichnet, dagegen Daten aus dem Elektrizitätszähler werden wiederum in der Kommunikationsvorrichtung UK aufgezeichnet.

Darauf werden die oben genannten Schritte wiederholt, wodurch eine zweiseitige Kommunikation zwischen dem System-Operator und dem von ihm zu bedienenden Elektrizitätszähler LI gewährleistet wird.

Die Kommunikationsvorrichtung UK, die ein wesentliches Element der Erfindung bildet, ist in einem Gehäuse OB untergebracht, die aus leicht gefärbtem, jedoch transparentem Polycarbonat gefertigt ist. Polycarbonat zeichnet sich durch eine sehr geringe Temperaturabhängigkeit, eine geringe dielektrische Absorption und einen hohen Isolationswiderstand aus, also durch Eigenschaften, die das Material zum Bau des für die Optoelektronik bestimmten Gehäuses OB prädestinieren.

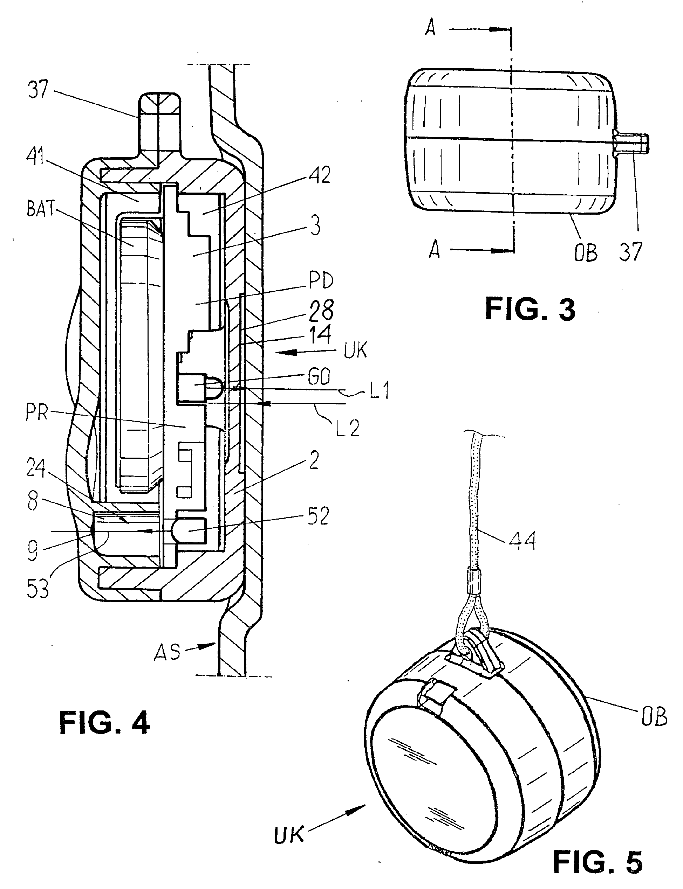

Das miniaturisierte Gehäuse OB ist rund, im Wesentlichen axialsymmetrisch und weist eine Form auf, die der Form einer flachen, kleinen und runden Cremedose sehr ähnlich ist. Das geschlossene Gehäuse OB hat einen Durchmesser von etwa 30 mm und eine Gesamthöhe H von etwa 10 mm. Wie aus den Figuren 3 bis 7 hervorgeht, umfasst das Gehäuse OB einen Deckel 1 und ein Unterteil 2.

Im Inneren des Gehäuses OB befindet sich eine zu den Teilen der Optoelektronik gehörende Elektronikplatte 3. Die Elektronikplatte 3 teilt das Gehäuse OB zwei Kammern 41, 42. In der Kammer 41 ist eine Knopfbatterie BAT untergebracht, während auf der Elektronikplatte 3 sich ein Datenspeicher PD und der Prozessor PR befinden. Weiterhin sind in der Kammer 42 und verbunden mit der Elektronikplatte 3 ein Lesekopf GO und ein LED-Element 52 untergebracht. Der Lesekopf GO ist an der Elektronikplatte 3 montiert und fixiert. Es handelt sich hierbei um einen bidirektional arbeitenden Lesekopf, der sowohl vom Zähler ankommende Strahlung empfangen als auch von der Optoelektronik erzeugte Lichtsignale entsprechend den Lichtstrahlen L1 und L2 (vgl. Fig. 4) senden kann.

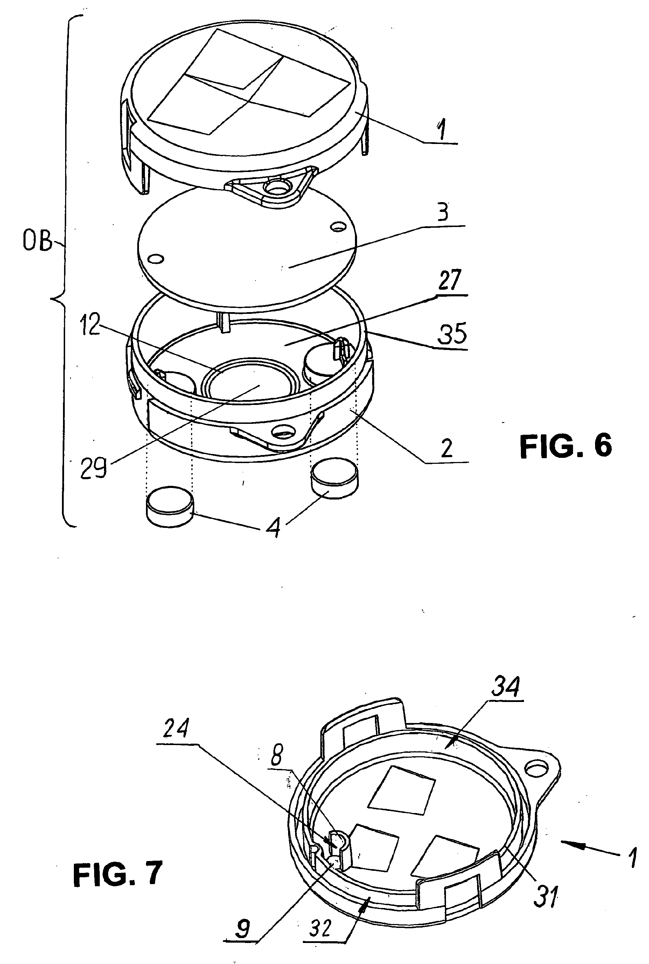

Das Unterteil 2 weist einen Boden 27 auf, an dessen Innenseite 29 und Unterseite 28 zentrisch angeordnete und sich gegenüberliegende kreisrunde Vertiefungen 12, 14 liegen. Damit ergibt sich eine verbesserte Lichtdurchlässigkeit im Bereich der Vertiefungen 12, 14. Figur 6 zeigt zwei durch die Vertiefung 12 voneinander beabstandete, von außen zugängliche kreisförmige Mulden 13 beziehungsweise Sacklöcher, in die Magnetelemente 4 eingesetzt sind, die dazu dienen, dass die Kommunikationsvorrichtung UK auf der Außenseite AS eines Zählergehäuses, und zwar in dessen Mulde M (vgl. Fig.1 rechte Seite) fixiert werden kann.

Auf der Innenseite des Deckels eins befindet sich eine Linse 9 (vergleiche Figuren 4 und 7), welche durch eine im transparenten Material des Deckels 1 geformte Mulde entstanden ist. Die Linse 9 ist durch eine halbzylindrische Innenfläche 24 einer Hülsenhälfte 8, die fest mit dem Deckel verbunden ist, abgeschirmt; eine weitere Abschirmung bildet die Innenfläche 34 einer inneren Seitenwand 31 des Deckels 1. Die Linse 9 trägt zur Sammlung eines durch das LED-Element 52 emittierten Lichtstrahls 53 bei. Das LED-Element 53 befindet sich in der Kammer 42 des Gehäuses OB. Mit dem Lichtstrahl 53 kann signalisiert werden, dass ein "handshaking", also ein Arbeitskontakt zwischen dem Elektrizitätszähler LI und mit der Andockstation SD sowie mit der Kommunikationsvorrichtung UK hergestellt ist.

Die innere Seitenwand 31 des Deckels 2 bildet zusammen mit dessen äußerer Seitenwand 25 eine umlaufende, U-förmiges Nut 32, in die wiederum ein umlaufender Rand 35 einer Seitenwand 26 des Unterteils 2 formschlüssig hineinpasst, ohne dass ein zusätzliches Dichtungsmaterial oder ein Dichtungsring eingesetzt werden muss. Das Gehäuse OB ist damit staub- und wasserdicht verschlossen.

Das miniaturisierte Gehäuse OB ist ferner mit einer Öse 37 zum Einhängen und mit einer Kordel 44 versehen, so dass das Gehäuse am Schlüsselbund befestigt werden kann. Insgesamt erhält man damit eine leichte Kommunikationsvorrichtung UK, die in einer Hosentasche bequem verstaut werden kann.

## Patentansprüche

1. Kommunikationsvorrichtung (UK) zur bidirektionalen Kommunikation für ein Datenaustausch-System (200),
wobei die Kommunikationsvorrichtung (UK) ein tragbares miniaturisiertes Gehäuse (OB) aufweist, welches eine Elektronikplatine (3) sowie wenigstens eine optische Sammellinse (9) beinhaltet,
wobei
- innerhalb des Gehäuses (OB) wenigstens ein nichtflüchtiger Datenspeicher (PD), wenigstens ein die Kommunikationsprotokolle erstellender Prozessor (PR) und wenigstens ein bidirektionaler optischer Lesekopf (GO) untergebracht sind,
- ins Gehäuse (OB) wenigstens ein Magnetelement (4) eingebaut ist, mit welchem die Kommunikationsvorrichtung (UK) zu einem flächigen Kontakt mit einem Verbrauchszähler (LI) und/oder mit einer Basisstation (SB) des Datenaustausch-Systems (200) bringbar und dort lösbar gehaltert ist.

2. Kommunikationsvorrichtung (UK) nach Anspruch 1, **dadurch gekennzeichnet, dass** die Magnetelemente (4) jeweils in einer Mulde (13) oder Sackloch des Gehäuses (OB) eingesetzt sind.

3. Kommunikationsvorrichtung (UK) nach Anspruch 1, **dadurch gekennzeichnet, dass** die Sammellinse (9) auf dem Weg eines durch ein LED-Element (52) emittierten Lichtstrahls (53) positioniert ist.

4. Kommunikationsvorrichtung (UK) nach Anspruch 1, **dadurch gekennzeichnet, dass** die Sammellinse (9) seitlich abgeschirmt ist.

## Claims

1. Communication device (UK) for bidirectional communication for a data exchange system (200), wherein the communication device (UK) has a portable miniaturised housing (OB) which includes an electronic circuit board (3) and at least one optical collecting lens (9),
wherein
- at least one non-volatile data memory (PD), at least one processor (PR) which establishes the communication protocols, and at least one bidirectional optical reading head (GO) are accommodated within the housing (OB),
- at least one magnet element (4) is Incorporated into the housing (OB), by means of which magnet element the communication device (UK) can be brought Into laminar contact with a meter (LI) and/or with a base station (SB) of the data exchange system (200) and can be secured in a detachable manner at this location.

2. Communication device (UK) as claimed in claim 1, **characterised in that** the magnet elements (4) are each inserted in a recess (13) or blind hole of the housing (OB).

3. Communication device (UK) as claimed in claim 1, **characterised in that** the collecting lens (9) is positioned on the path of a light beam (53) emitted by an LED element (52).

4. Communication device (UK) as claimed in claim 1, **characterised in that** the collecting lens (9) is laterally shielded.

## Revendications

1. Dispositif de communication bidirectionnelle (UK) destinée à l'emploi dans un système d'échange de données (200) et comprenant un boîtier miniature portatif (OB) qui inclut une platine électronique (3) et au moins une lentille optique de convergence (9), tandis que, à l'intérieur dudit boîtier (OB), il est logé au moins une mémoire non volatile (PD), au moins un processeur (PR) générant les protocoles de communication et au moins une tête de lecture optique (GO) bidirectionnelle, ledit boîtier (OB) incluant par ailleurs au moins un élément magnétique (4) permettant de mettre le dispositif de communication (UK) en contact de surface avec un compteur de consommation (LI) et/ou avec une unité de base (SB) du système d'échange de données (200) et de fixer ledit dispositif de communication (UK), amovible, sur ces derniers.

2. Dispositif de communication (UK) selon la revendication 1, **caractérisé en ce que** les éléments magnétiques (4) sont, chacun, insérés dans un creux (13) ou un trou borgne du boîtier (OB).

3. Dispositif de communication (UK) selon la revendication 1, **caractérisé en ce que** la lentille de convergence (9) est positionnée sur le trajet d'un rayon lumineux (53) émis par un élément à diode électroluminescente (52).

4. Dispositif de communication (UK) selon la revendication 1, **caractérisé en ce que** la lentille de convergence (9) est latéralement masquée par un écran.
